# EUROPEAN PATENT SPECIFICATION

(11) **EP 4 085 867 B1**
(45) Date of publication and mention of the grant of the patent: **23.07.2025**
(21) Application number: 21171935.6
(22) Date of filing: 04.05.2021
(51) Int. Cl.: A61C 1/08, A61C 1/12, A61C 17/00

(54) **ANGLED-HEAD ROTARY DENTAL CLEANING DEVICE WITH LIGHT GUIDE**
DREHENDE ZAHNREINIGUNGSVORRICHTUNG MIT ANGEWINKELTEM KOPF UND LICHTLEITER
DISPOSITIF DE NETTOYAGE DENTAIRE ROTATIF À TÊTE INCLINÉE AVEC GUIDE OPTIQUE

(43) Date of publication of application: 09.11.2022
(73) Proprietor: KaVo Dental GmbH, 88400 Biberach (DE)
(72) Inventor: MAIER, Matthias, 76698 Ubstadt-Weiher (DE); THANNER, Andreas, 88400 Biberach/Riß (DE); CLAßEN, Thomas, 88518 Herbertingen (DE); OTT, Marcel, 88529 Zwiefalten (DE); KRÜGER, Dennis, 73312 Geislingen (DE); KLEE, Alexander, 88400 Biberach/Riß (DE)
(74) Representative: Thun, Clemens

(56) References cited:
- GB-A- 2 371 488
- US-A- 5 647 745
- US-A1- 2006 183 073
- US-A1- 2012 301 841
- US-A1- 2020 390 532

## Description

The present invention is directed to a dental cleaning device, and more specifically to a so-called disposable prophy angle piece.

Dentists often use angled-head rotary cleaning devices known as "prophy" (prophylaxis) angle pieces with a longitudinal neck portion and a head portion that is angled relative to the neck. The angled head terminates into or holds a rotary tool which is dipped into a cleaning paste or other treatment material and then applied to a patient's teeth at a variable rotational speed. The rotary tool is most commonly a relatively soft "cup" used to apply paste or treatment material but different types of such cleaning tools are known for different purposes, such as brushes and rubber points.

At its rear end, the neck portion is coupled to a driving component which can be a motor handpiece or an adapter element for coupling the neck portion with a motor handpiece wherein a rotary movement provided by the driving component is transferred to the cleaning tool located at the neck portion by means of transmission elements accommodated in the neck portion and/or the head portion.

Usually, such cleaning devices as explained above are provided as disposable devices, i.e., they are intended for single-use and will be discarded afterwards. In this way, a complex cleaning and sterilization of the devices can be avoided. Consequently, production costs for these devises is a significant factor and, therefore, prophy angle pieces are often made from plastic and manufactured by injection molding.

On the other hand, dental treatment of requires a good visibility of the area to be treated. It is thus generally known that more complex treatment devices like reprocessable straight and contra-angle handpieces comprise a light source which is adapted to emit light in the region just in front of the treatment tool, e.g. in the direction of the tip of a dental drill. However, the production of such reprocessable straight and contra-angle handpieces is more complex and cost intensive such that integrating a light source in the headpieces does no significantly influence the production costs.

In this regard, US 2020/0390532 A1 discloses a prophy angle piece wherein an LED is attached to a front portion of the neck to provide a treatment light. Cables providing an electrical connection to driving component are arranged within the interior of the sleeve-like neck portion. As an alternative solution, a fibre optic element is arranged within the neck portion running from the rear end to a region close to the head portion wherein the fibre optic element transmits light provided by the driving component to the light emitting end again to provide a treatment light.

However, also the solutions of US 2020/0390532 A1 significantly complicate the productions of these prophy angle pieces resulting in increased productions costs. Thus, there is a need for of operating a disposable prophy angle piece with light, as is possible with reprocessable straight and contra-angle handpieces, wherein the productions costs of these devices can be kept as a reasonable level.

Further in the prior art, GB 2 371 488 A discloses dental handpieces having an elongated neck portion and a head portion wherein at least one channel is contained in the handpiece. This at least one channel can be used for example as a light guide, for power supply or as a supply channel, for example for operating an air pressure turbine, which is located in the head portion. The handpiece is manufactured by arranging the required channels in their intended position and then casting plastic around the channels in a mold provided for this purpose

Further, US 2012/301841 A1 discloses a dental handpiece having a head portion for receiving a tool, a rear sleeve portion for connecting to a handle portion having a drive, and a body connecting the head portion and the sleeve portion. The body consists of a metal sleeve which is hollow so that inside mechanical components can be arranged which are designed to transmit a rotation of the drive of the handle part to the tool located on the head portion. The metal sleeve is partly encapsulated with plastic to improve it's grip.

Finally, US 5,647,745 discloses a head for a dental contra-angle handpiece having an operating shaft wherein the head is coupled to the operating shaft in the vicinity of the bend of the contra-angle. The head is produced from a synthetic material and accommodates a longitudinal light guide.

The above-mentioned problem is solved by the invention as defined in the independent claims. Preferred embodiments of the present invention are subject matter of the dependent claims.

According to the present invention, a light guiding element is used to transfer light provided by a driving component to a position close to the head portion. Light enters the light guiding element at its rear end and is guided to a light exit portion, which emits the light in such a way that the region around the cleaning tool of the device is illuminated. The light guiding element is held by the neck portion via a form-locking connection, wherein the light guiding element is formed by a separate element which is snap-fittingly attached to the neck portion. By accommodating at least a portion of the light guiding element in the wall of the neck portion, thus use of a separate fibre optic element which has to be separately arranged within the cleaning device can be avoided which makes the assembly and production of the cleaning device lees complex resulting in reduced production costs.

Accordingly, in line with the present invention, an angled-head rotary cleaning device for dental purposes is provided comprising a housing which is made from plastic and forms an elongated neck portion and a head portion located at a first end of and being angled relative to the neck portion,
wherein a second end of the neck portion is adapted to removably couple with a driving component providing a rotary movement and wherein the neck portion forms a sleeve with a wall, the housing accommodating transmission elements for transferring a rotary movement from the driving component to a cleaning tool being provided at the head portion, wherein the cleaning device further comprises an elongated light guiding element, said light guiding element comprising a light entry portion being positioned at the second end of the neck portion for receiving light provided by the driving component and a light exit portion being positioned close to the head portion, wherein at least a portion of the light guiding element is accommodated within the wall of the neck portion, and
wherein the light guiding element is held by the neck portion via a form-locking connection, the light guiding element being formed by a separate element which is snap-fittingly attached to the neck portion.

Using the light guiding element and accommodating at least a portion of it in the wall of the neck portion results in several advantages compared to the use of a fiber optic element. At first, the light guiding element, which is made from a transparent plastic material and is preferably formed by injection molding, can be optimized with respect to the light entry portion, the light guiding portion and the light exit portion. In contrast to the fiber optic element, no separate or additional optical elements are required to ensure efficient light injection and light emission, since the light guiding element itself can already be designed to be optimized in this respect. Further, integrating the light guiding element in the wall of the cleaning device can be achieved much easier than separately arranging the fiber optic within the neck portion.

Preferably, the light guiding element is elongated in a longitudinal direction of the cleaning device and is positioned on a bottom side of the cleaning device, which is where the cleaning tool being provided at the head portion. In this way, the light exit portion can be arranged to provide the maximum available light for illumination the cleaning tool.

Preferably, the light guiding element integrates into the outer geometry of the neck portion allowing leaving the outer geometry of the cleaning device as unchanged as possible. This results in the advantageous retention of the known ergonomic outer contour of such devices.

As the light guiding element is attached to the neck portion by the form-locking connection mentioned above, the light guiding element preferably also serves to lock the drive axis of the cleaning device. Accordingly, the light guiding element can comprise a catching porting facing towards the interior of the neck portion which catching portion is adapted for axially fixing a transmission element extending through the neck portion. In this situation, the light guiding element performs two functions at once, i.e. transmitting the light to the cleaning tool and fixing the transmission element. In this way, the number of components forming the inventive cleaning device can be kept at a minimum level.

The light guiding element can be made of a light conducting material, preferably a light conducting thermoplastic material like PMMA or PC, and has a length of 23 +10/-5 mm. In an alternative solution, the light guiding element has a length that the light entry portion flushes with the rear end of neck portion. In a further alternative solution, the light guiding element ends in a recessed light in-coupling portion of the housing of the cleaning device. Finally, the wall of the neck portion could comprises a short channel portion close to the coupling region in which the rear end of light guiding element is inserted during the mounting process.

According to a further preferred embodiment of the present invention, the light entry portion of the light guiding element is adapted to co-operate with a connecting portion of the driving component for securing the cleaning device against rotation with respect to the driving component. This can be achieved by providing a light guiding element wherein the light entry portion forms a protrusion or a recess, which is adapted to engage with a corresponding recess or protrusion, provided at the driving component. Again, the light guiding element not only serves to transmit light by provides additional functionality resulting in a reduced number of individual parts.

For receiving the rotary movement provided by the driving component, the transmission element accommodated in the neck portion preferably comprises an elongated driving shaft having at its rear end a pin-like coupling portion, which is adapted to co-operate with a clamping mechanism of the driving component. The resulting structure of the coupling mechanism is extremely simple at least with respect to the side of the cleaning device. Again, this helps to keep the productions costs of the cleaning device at the desired low level.

The present invention also provides a dental cleaning system comprising an angled-head rotary cleaning device as explained above and a driving component adapted to removably couple with the cleaning device to provide a rotary movement, which is transmitted to the cleaning device, wherein the driving component comprises means for providing light to the light guiding element of the cleaning device.

According to the present invention, the driving component can be a motor handpiece comprising a motor, preferably an electric motor, for driving the rotary driving shaft, wherein the motor handpiece is directly coupleable with the cleaning device and comprises a light source facing towards the light entry portion of the light guiding element of the cleaning device. Alternatively, the driving component can be an adapter element, said adapter element being coupleable with a first end to the cleaning device and with a second end with a motor handpiece providing a rotary movement, wherein the adapter element comprises transmission elements for transmitting the rotary movement provided by the motor handpiece to the cleaning device. In this second alternative solution, the adapter element comprises a light source being located at the first end for providing light directly to the light guiding element of the cleaning device or a light guide facing with one end towards the motor handpiece for receiving light provided by a light source of the motor handpiece and facing with a second end towards the light entry portion of the light guiding element of the cleaning device.

In the following, the invention will be explained in more detail with reference to the enclosed drawings.
Figure 1 generally shows a dental cleaning system based on a disposable prophy angle.
Figures 2a to 2c show three different alternative solutions for providing light for disposable prophy angle.
Figures 3 to 6 show a first embodiment of an inventive disposable prophy angle with a light guiding element.
Figure 7 shows the light guiding element of the embodiment of figures 3 to 6 in isolated form.
Figures 8 to 10 show further inventive alternatives for snap-fittingly attaching a light guiding element to a disposable prophy angle.
Figures 11 to 14 show further examples of a disposable prophy angle, in which the light guiding element is clampingly held by housing parts of the disposable prophy angle.
Figures 15a to 15c show a further example in which a material locking connection for the light guiding element is obtained.

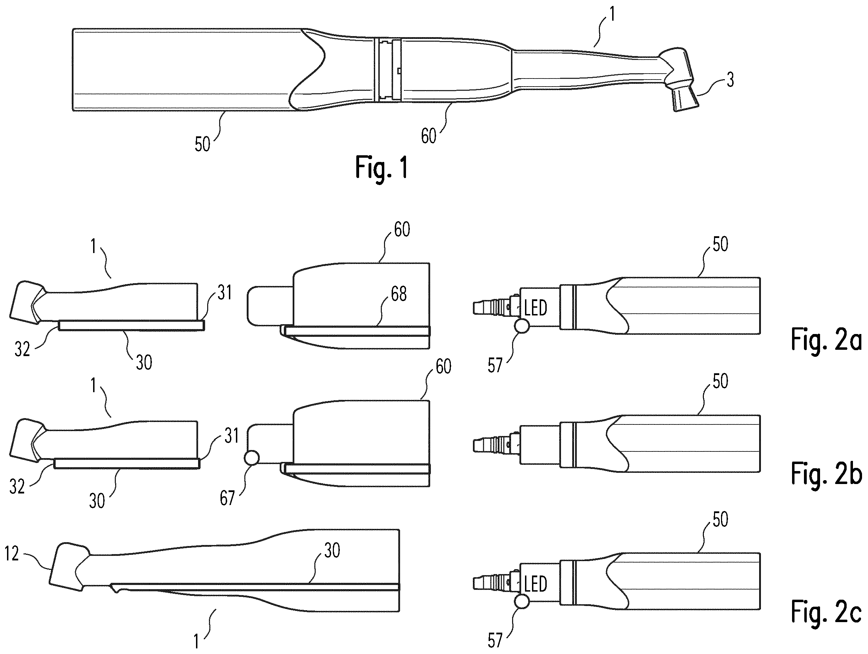

Figure 1 generally shows a dental cleaning system based on a so-called disposable prophy angle (DPA for short) as it is known in the prior art. The system as shown in figure 1 comprises three main components, a motor handpiece 50, an adapter element 60 and the DPA forming an angled-head rotary cleaning device 1.

Motor handpiece 50 is a longitudinal, generally cylindrical handpiece component comprising internally an electric motor providing a rotary movement. Motor handpiece 50 can comprise internal power supply components like batteries or accumulators or alternatively can be connected to an external power supply via a cable, which is not shown in the drawings. The electric motor provides rotary movement with variable speed, which is transmitted to a cleaning tool 3 located at the front end of cleaning device 1.

In many solutions known from the prior art, the cleaning device 1 is not directly coupled to the motor handpiece 50, but an intermediate component is used as an adapter. Figure 1 also shows such an adapter element 60, which is coupled at its rear end to the motor handpiece 50 and at its front end to the cleaning device 1. The adapter element 60 is preferably designed in accordance with the provisions of DIN EN ISO14457 and enables flexible connection of different cleaning devices to the motor handpiece 50, whereby the rotary movement provided by the motor handpiece 50 is transmitted to the cleaning device via internal transmission elements. As a further advantage resulting from the use of the adapter element 60, the distance between the motor handpiece 50 and the cleaning device 1 is increased. This is an important aspect, as the cleaning device 1 should be the only component in direct contact with a patient. As mentioned above, the cleaning device 1 is designed as a disposable device that is disposed of after use, whereas the motor handpiece 50 is used multiple times, but must be cleaned and/or sterilized through a complex reprocessing process. Therefore, contamination of the motor handpiece 50 should be avoided.

In general, it is desirable to improve the visibility of the area treated by the cleaning device 3 by directing light to the corresponding area. In the prior art, it is known from US 2020/0390532 A1 to integrate an LED in the cleaning device 1, which is supplied by the motor handpiece 50 via cables that extend through the cleaning device 1 and have connection sections suitable for coupling with corresponding connections on the motor handpiece. The present invention provides a more economical solution that still allows light to be efficiently directed to the front area of the cleaning tool 3, however the cleaning device 1 can be manufactured at a lower cost.

The general idea of the present invention is to use a light guiding element, which is integrated in cleaning device 1 and transmits light received from a driving component to a light exit portion in such a way that light is directed to cleaning tool 3.

Figures 2a - 2c show three general alternatives to achieve illumination of the treatment area in accordance with the present invention, which differ with respect to the location of the primary light source.

In the embodiment shown in figure 2a, the cleaning system again comprises the three components, i.e. motor handpiece 50, adapter element 60 and angled-head rotary cleaning device 1. Here, a light source preferably formed by an LED 57 is provided at motor handpiece 50. In particular, LED 57 is provided at the front end of motor handpiece 50 in the area of a coupling portion being adapted to couple with the rear end of adapter element 60. Light generated by LED 57 is transferred via a first light guide 68 to the front portion of adapter element 60. When coupled with cleaning device 1, light forwarded by light guide 68 enters a light entry portion 31 of the inventive light guiding element 30, which finally emits light at its light exit portion 32, which is positioned close to the head portion 12 of cleaning device 1, which is where cleaning tool 3 is located.

In figure 2b, again intermediate adapter element 60 is used to transmit rotary movement provided by motor handpiece 50 to cleaning device 1. Now, a light source 67, which is again formed by an LED, is provided at adapter element 60, in particular at the front coupling portion of adapter element 60, which connects to the rear portion of cleaning device 1. Similar to the solution of figure 2a, a light guiding element 30 is integrated in cleaning device 1 wherein light generated by LED 67 enters light guiding element 30 at its light entry portion 31 and it is then forwarded to and emitted at light exit portion 32 of light guiding element 30. In this case, the adapter element 60 must comprise electrical connection components, which connect to motor handpiece 50 in order to provide power for driving the LED 67.

Finally, figure 2c shows a solution where the adapter element 60 is omitted and the cleaning device 1 is directly coupled with motor handpiece 50. Here, the length of cleaning device 1 is increased compared to the two solutions shown in figures 2a and 2b in order to ensure that again head portion 12 of the cleaning device 1 is separated from the motor handpiece 50 by a sufficient distance. In this solution, the primary light source is again an LED 57 arranged at the coupling portion of motor handpiece 50 and a light guiding element 30 extending from the rear end of cleaning device 1 to a front portion close to the head portion transfers the light in order to illuminate the region of the cleaning tool.

It has to be mentioned that figures 2a to 2c schematically show the general concept of the present invention of using a light guiding element 30, which is integrated in cleaning device 1 and transfers a light provided by a driving component (which can be the motor handpiece 50 or adapter element 60) to the region where the cleaning tool 3 is located. The present invention in particular makes use of specific integration techniques allowing reducing production costs for cleaning device 1 while at the same time an efficient light transmission can be achieved. Several embodiments of the three alternative solutions will be explained in more detail in the following.

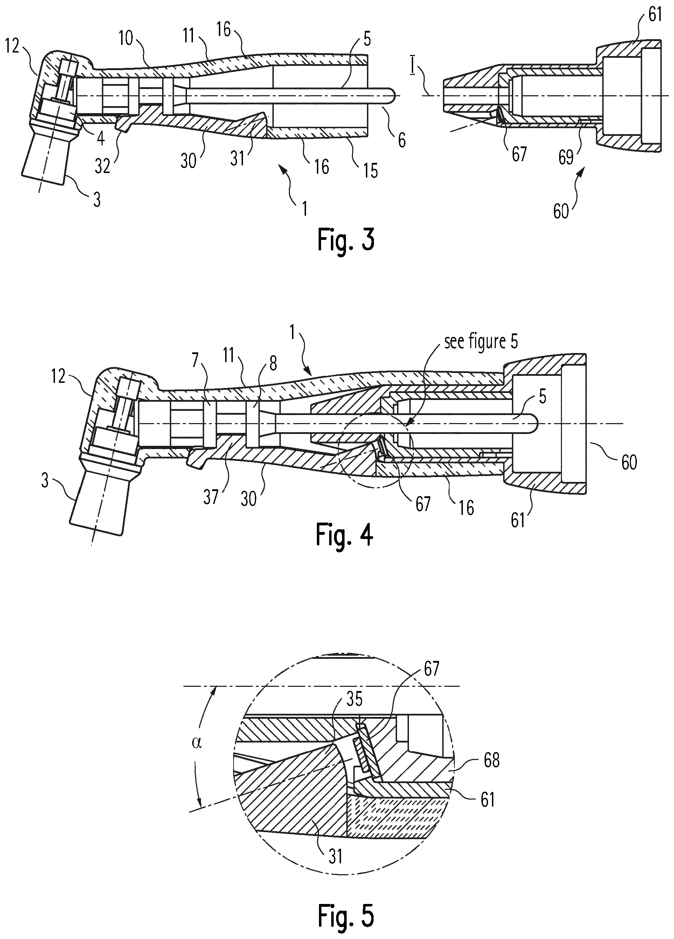

A first preferred embodiment is shown in Figures 3 to 7, wherein an angular head rotary cleaning device 1 is coupled to an adapter element 60. As known from the prior art, the adapter element 60 has the main function of transmitting a rotary motion provided by a motor handpiece - not shown - to the cleaning device 1 in order to rotate the cleaning tool 3. The transmission within the cleaning device 1 is performed by means of an elongated transmission element 5 extending through a sleeve-shaped neck portion 11 of the housing 10. A second rotary element 4 is arranged at the head portion 12 of the cleaning device 1, which couples to the transmission element 5 via an angular gear and carries the cleaning tool 3 at its front end. All components of the cleaning device 1 are preferably made of plastic, which enables a reduction in material costs. The rear end portion of the transmission element 5 forms a pin-shaped coupling portion 6, which extends into adapter element 60 and engages with a clamping mechanism of the adapter element 60 to enable transmission of motion.

In this first embodiment, the adapter element 60 carries at its front portion at least one light source 67 configured to be coupled to the cleaning device 1. The light source 67 may be positioned over the entire radius of the cylindrical coupling section and thus be annular in shape. Preferably, the light source is implemented in the form of a single LED forming a point light source. The LED 67 can have any color or be an ultraviolet LED, but is preferably realized in the form of a white light LED. The light source 67 and in particular its direction of emission are directed towards the cleaning device 1, preferably at a defined angle α between 0° and 25° with respect to the axis of rotation I, in order to improve the transmission of the light to the light guiding element 30. This will be explained in more detail later.

The LED 67 is soldered onto a surface of a carrier portion of adapter element 60, preferably onto a bevelled surface (see figure 5). A 3D-MID carrier 68 is preferably used and the LED 67 is contacted by electrically conductive components. It is particularly advantageous that the 3D-MID carrier 68 carries the electrical contacting of the LED 67 and the required electrical conductors. The electric contact is routed to an interface facing away from the cleaning device 1 via the electrical conductors. This is preferably done via pockets or grooves recessed in the wall of adapter element 60. The pockets extend over the entire length of the 3D-MID carrier 68 and the carrier is primarily rotationally symmetrical. On one, preferably eccentrically offset, surface of the carrier 68 a component 69 can be integrated which serves to detect the electric coupling with the LED 67. A resistor can be used for this purpose, which is preferably connected in parallel to the LED.

The outer sleeve 61 of adapter element 60 is primarily rotationally symmetrical and has an opening and a groove for the light exit. This opening is approximately round and serves to ensure the light emission. The groove is designed in such a way that the cleaning device 1 can dip onto the outer sleeve when it is plugged on, in order to achieve the smallest possible distance between the LED 67 and the light entry portion 31 of light guiding element 30. Preferably, an elevation 35 attached to the light guiding element 30 dips into this groove during the plug-in process. In this way, a pre-centering of the cleaning device 1 with respect to the coupling element 60 is achieved and the cleaning device 1 is secured against a rotational movement with respect to adapter element 60. This results in the positive effect that the location of the light entry portion 31 of light guiding element is precisely defined with respect to LED 67.

The inventive angled-head rotary cleaning device 1 contains the light guiding element 30 on the lower side facing the cleaning tool 3, which is located at the head portion 12. The light guiding element 30 is geometrically designed to integrate into the outer geometry of the longitudinal neck portion 11 and has a light exit portion 32 at its front end near the cleaning tool 3. In the shown embodiment, a light exit is preferably affected by the continuation of the light guiding element 30 at an angle such that the light is emitted from the outer contour of the wall 16 of neck portion 11. Preferably, the angle is 72° +/- 15° relative to the axis of rotation I. The light exit portion 32 then closes the outer geometry of the cleaning device 1 in the direction to the cleaning tool 3.

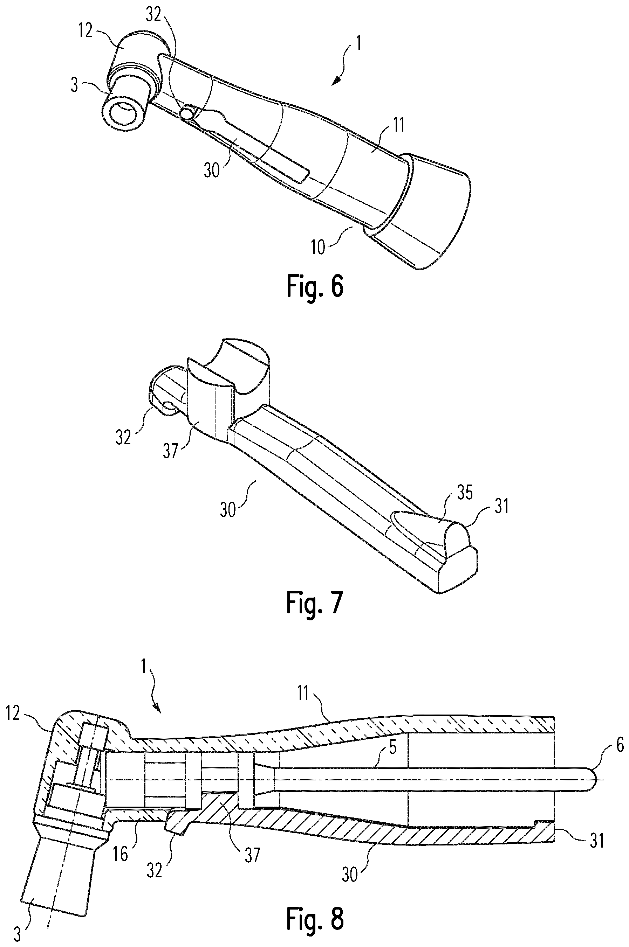

The light guiding element 30 is shown in more detail in figure 7 showing in particular the light entry portion 31 and the light exit portion 32. As already mentioned, the light guiding element 30 has an elevation 35 in the direction of the axis of rotation I at the light entry portion 31 which serves to secure the cleaning device 1 against rotation with respect to adapter element 60. This elevation 35 also forms a lens with a preferably convex shaped light entry surface 36 to improve the light entry into the light guiding element 30.

As a further particular feature, the light guiding element 30 has an integrally formed catching portion 37, which forms a part-cylindrical bearing surface, which engages an intermediate portion of the transmission element 6 located between two disc-shaped flange portions 7 and 8. When the light guiding element 30 is attached to the housing 10 of the cleaning apparatus 1, this catching portion 37 secures the transmission element 5 in the axial direction so that the front coupling portion of the transmission element 5 engages the second rotary member 4 to which the cleaning tool 3 is attached.

In the first embodiment shown in figures 3 - 7, light guiding element 30 is connected to housing 10 of cleaning device 1 by a form-locking connection. As defined in the invention, the light guiding element 30 is snap-fittingly attached to the sleeve 15 form by the neck portion 11. For production of cleaning device 1, at first housing 10 is formed - preferably by injection moulding - and transmission element 5 and second rotary member 4 with the cleaning device 3 are inserted into the housing 10. In a final production step, light guiding element 30 is attached to the housing 10 in order to complete the outer contour of cleaning device 1 and at the same time secure transmission element 5 against axial movement.

Preferably in addition to the latching of the catching portion 37 near the cleaning tool 3, there is a further latching on the inside of the light guiding element 30 at the end remote from the cleaning tool 3 to ensure that the light guiding element is fixed at this point of the cleaning device. Preferably, this latch is released by a snap connection, which latches internally in the geometry of the outer sleeve.

The length of the light guiding element 30 is kept as short as possible to keep the transmission losses as low as possible. Furthermore, a short design increases the stability of the snap-fit connection and thus the fixation of the light guiding element 30 in the cleaning device 1. For example, the light guiding element 30 has a length of 23 +10/-5 mm. Is made of a light conducting material, preferably a light conducting thermoplastic material like PMMA or PC.

Accordingly, cleaning device 1 consists in total of only four separate elements which all can be manufactured in standard processes like injection moulding. Further, mounting of these four components can be realised in a fast and efficient way.

In the embodiment show in figures 3 - 7, light entry portion 31 of the relatively short light guiding element 30 is located at in intermediate position in the longitudinal direction of neck portion 11. In this case, the light source 67 of adapter element 60 is located in the front region of the cylindrical coupling element, which is inserted into the rear end of cleaning device 1 during the coupling process.

In an alternative solution shown in figure 8, the longitudinal extension of light guiding element 30 is increased such that the light entry portion 31 more or less flushes with the rear end of neck portion 11. This of course requires an adaptation of the location of the LED 67 of adapter element 60, which then should be arrange at a corresponding surface portion facing towards the light entry portion of light guiding element 30. The resulting cleaning device 1 with elongated light guiding element 30 is shown in figure 8. In this case, the mechanical latching of the light guiding element 30 preferably does not take place at the point of light in-coupling but at an intermediate position.

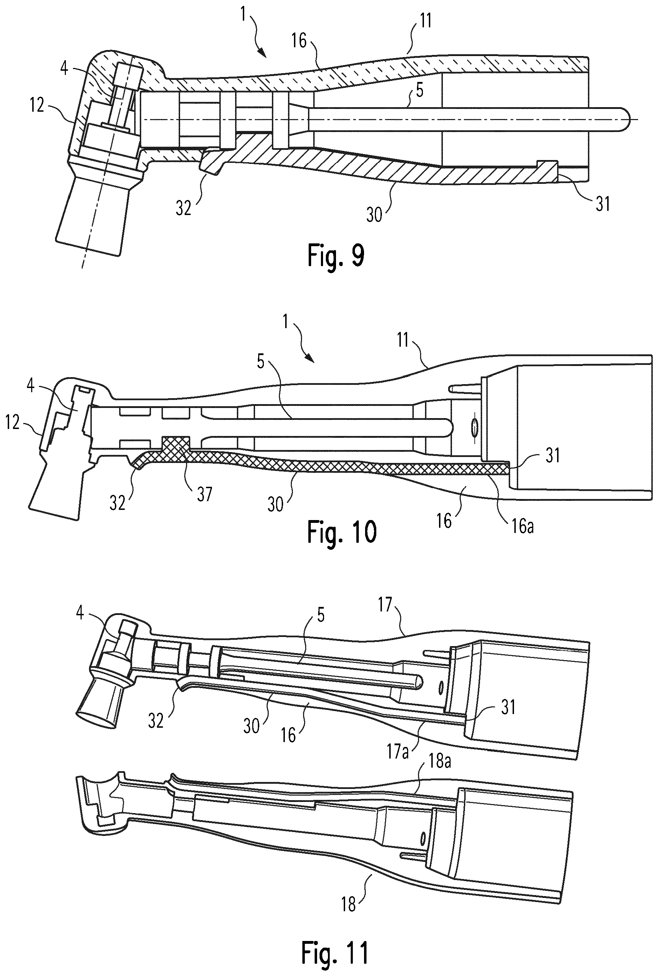

A third design variant is shown in figure 9 wherein the length of light guiding element 30 is again increased compared to the embodiment shown in figures 3 - 7 but wherein the light guiding element 30 ends in an recessed light in-coupling portion of housing 10 of the cleaning device 1. The recessing of the light guiding element 30 ensures that a corresponding protrusion provided at adapter element 60 can engage this recess allowing again to secure the cleaning device against rotation at the point where the light in-coupling takes place.

A fourth design variant is shown in figure 10 wherein the cleaning device 1 now is configured to directly couple with the motor handpiece 50 (not shown in figure 10). This solution corresponds to the general alternative solution shown in figure 2c wherein the housing of cleaning device 1 is extended in longitudinal direction in order to increase the distance between cleaning tool 3 to the driving component. Again, as defined in the invention, light guiding element 30 is formed as an element, which is snap-fittingly attached to the wall 15 of neck portion 11. In this case, the wall 16 of neck portion 11 comprises a short channel portion 16a close to the coupling region in which the rear end of light guiding element 30 is inserted during the mounting process. The front portion light guiding element 30 having again the catching portion 37 is then snap-fittingly attached to the neck portion 11 similar to the embodiments shown in figures 3 - 9. In the solution shown in figure 10, the separate adapter element 60 is not necessary and the number of components of the complete cleaning system is further reduced.

Again, the light transmission from the driving component to the cleaning device 1 can additionally be used to secure the cleaning device 1 against rotation. In this case, the light guiding element 30 ends in a slightly protruding latching lug that engages in a corresponding recess in an end face of the motor handpiece 50, in which the LED is also arranged. A reversed configuration in which the LED of the motor handpiece 50 is arranged on a projection or latching lug would also be conceivable.

For all embodiments discussed so far, a form-fitting connection is used for attaching the light guiding element 30 to housing 10 of cleaning device 1 wherein, as defined in the invention, a snap-fitting connection is used. An alternative possibility to attach light guiding element 30 to cleaning device 1 is shown in figures 11 to 14.

Here, the housing 10 clampingly holds the light guiding element 30. This is achieved by providing two separate housing components 17 and 18 as shown in figure 11, which form half shells of the housing 10 and are attached to each other during the mounting process to hold all internal components. In particular, at first transmission components 4, 5 including the cleaning tool 3 are inserted into one of both half shells 17 and the second half shell 18 is then connected with the first half shell for example by specific clamping or ledging mechanism. In a similar way as transmission components 4 and 5, also light guiding element 30 is now integrated in the wall 16 of neck portion 11. In this case, both housing components 17 and 18 comprise corresponding longitudinal grooves 17a and 18a in their respective walls wherein the grooves 17a, 18a cooperate to form a channel for accommodating at least a portion of the longitudinal light guiding element 30, preferably for accommodating the light guiding element 30 over its entire length.

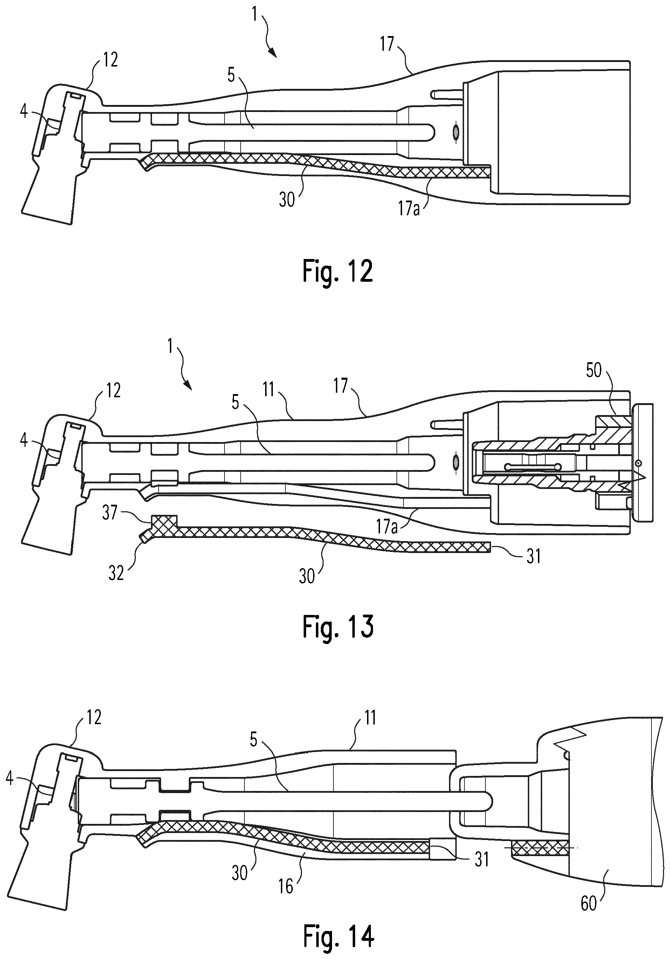

In the solution shown in figures 11 and 12, the structure of light guiding element 30 is less complex compared to the solution shown in figures 3 - 10 simplifying the production process. In particular, the diameter of the light guiding element 30 is in this embodiment constant over the whole length. However, as shown for example in figure 13, also in this alternative solution the front portion close to the light exit portion 32 of light guiding element 30 can include a catching portion 37 which again serves to secure the longitudinal transmission element 5 within cleaning device 1. Further, similar to the embodiments discussed above, the light entry portion 31 of light guiding element 30 can additionally serve to secure cleaning device 1 against a rotational movement. This is achieved by either providing the light guiding element 30 with a light entry portion 31, which forms or is located in a protrusion engaging in a recess of the corresponding driving component 50 or 60 (figure 13) or by arranging the light entry portion 31 in a corresponding recessed portion in which a protrusion provided at the driving component 50, 60 engages (figure 14). As shown by figures 11 to 14, the cleaning device 1 can be provided either in the short configuration where the adapter element 60 is used for coupling with the motor handpiece 50 or in the elongated configuration for a direct coupling with the motor handpiece 50.

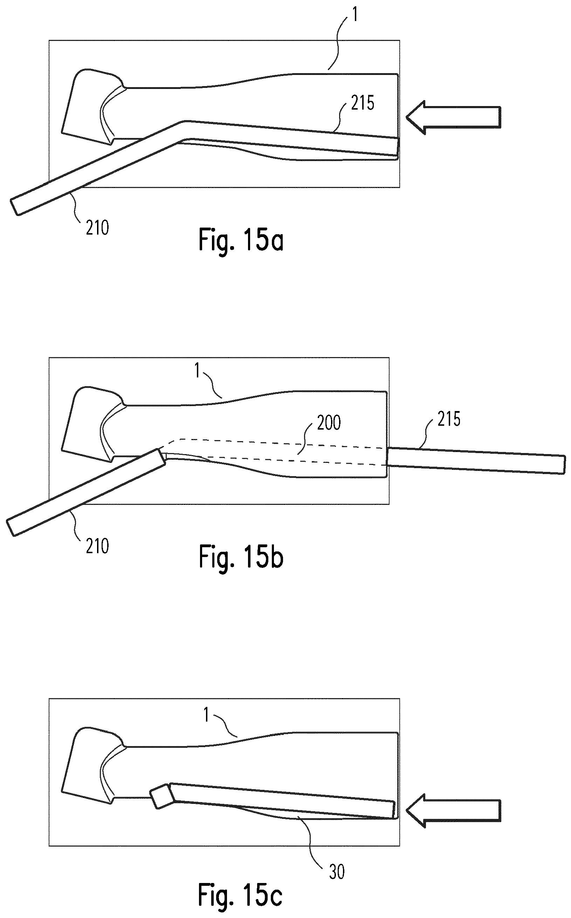

Finally, a third option to integrate the light guiding element into the cleaning device is explained in connection with figures 15a - 15c. Here, a material-locking connection is used in which the light guiding element 30 is permanently attached to the housing 10 of cleaning device 1.

A first solution for achieving such a material bond is illustrated in Figures 15a to 15c, using a two-component plastic injection molding process performed in two stages. In this scenario, the housing 10 of the cleaning device 1 is first molded (Figure 15a), leaving a channel 200 that is then filled with a second material that forms the light guiding element 30. In order to maintain the channel 200, certain slides 210 and 215 are arranged in the mold during the molding of the housing 10, which are removed after the material forming the housing 10 of the cleaning device 1 has hardened (Figure 15b). This creates a longitudinal cavity 200 which, in a second step (Figure 15c), is filled with the material forming the light guiding element 30.

As an alternative solution, it would also be possible to produce in a first step light guiding element 30, then place light guiding element 30 within the mould for manufacturing the cleaning device housing 10 and moulding the cleaning device in a second step. Also by this over-moulding process, an integral and permanent connection between housing 10 and light guiding element 30 is obtained.

The light guiding element again can have similar features as light guiding element 30 explained in connection with the embodiments shown in figures 3 - 14 with the exception of the catching portion. However, again light guiding element is not only used to transfer light but also helps to improve the coupling to the driving component by additionally securing the cleaning device against rotation.

Although, the description provides several solutions for efficiently integrating a light guiding element in a disposable cleaning device, the object of the present invention is defined by the wording of the claims.

## Claims

1. Angled-head rotary cleaning device (1) for dental purposes comprising a housing (10) which is made from plastic and forms an elongated neck portion (11) and a head portion (12) located at a first end of and being angled relative to the neck portion (11), wherein a second end of the neck portion (11) is adapted to removably couple with a driving component (50, 60) providing a rotary movement and wherein the neck portion (11) forms a sleeve (15) with a wall (16), the housing (10) accommodating transmission elements (4, 5) for transferring a rotary movement from the driving component (50, 60) to a cleaning tool (3) being provided at the head portion (12), wherein the cleaning device (1) further comprises an elongated light guiding element (30), said light guiding element (30) comprising a light entry portion (31) being positioned at the second end of the neck portion (11) for receiving light provided by the driving component (50, 60) and a light exit portion (32) being positioned close to the head portion (12),
wherein at least a portion of the light guiding element (30) is accommodated within the wall (16) of the neck portion (11), and
wherein the light guiding element (30) is held by the neck portion (11) via a form-locking connection, the light guiding element (30) being formed by a separate element which is snap-fittingly attached to the neck portion (11).

2. Angled-head rotary cleaning device (1) according to claim 1, wherein the light guiding element (30) is elongated in a longitudinal direction of the cleaning device (1) and is on a bottom side of the cleaning device (1), which is where the cleaning tool (3) being provided at the head portion (12).

3. Angled-head rotary cleaning device according to claim 1 or 2,
wherein said light guiding element (30) is integrated into the outer geometry of the neck portion (11).

4. Angled-head rotary cleaning device according to one of claims 1 to 3,
wherein the light guiding element (30) comprises a catching porting (37) facing towards the interior of the neck portion (11) which catching portion (37) is adapted for axially fixing a transmission element (5) extending through the neck portion (11).

5. Angled-head rotary cleaning device according to one of claims 1 to 4,
wherein the light guiding element (30) is made of a light conducting material, preferably a light conducting thermoplastic material like PMMA or PC, and has a length of 23 +10/-5 mm.

6. Angled-head rotary cleaning device according to one of claims 1 to 4,
wherein the light guiding element (30) has a length that the light entry portion (31) flushes with the rear end of neck portion (11).

7. Angled-head rotary cleaning device according to one of claims 1 to 4,
wherein the light guiding element (30) ends in a recessed light in-coupling portion of the housing (10) of the cleaning device (1).

8. Angled-head rotary cleaning device according to one of claims 1 to 4,
wherein the wall (16) of the neck portion (11) comprises a short channel portion (16a) close to the coupling region in which the rear end of light guiding element (30) is inserted during the mounting process.

9. Angled-head rotary cleaning device according to one of claims 1 to 8,
wherein the light entry portion (31) of the light guiding element (30) is adapted to co-operate with a coupling portion of the driving component (50, 60) for securing the cleaning device (1) against rotation with respect to the driving component (50, 60), and wherein the light entry portion (31) preferably forms or is located in a protrusion or a recess which is adapted to engage with a corresponding recess or protrusion provided at the driving component (50, 60).

10. Angled-head rotary cleaning device according to one of claims 1 to 9,
wherein a transmission element (5) accommodated in the neck portion (11) forms an elongated driving shaft having at its rear end a pin-like coupling portion (6) which is adapted to co-operate with a clamping mechanism of the driving component (50, 60).

11. Dental cleaning system comprising
an angled-head rotary cleaning device (1) according to one of claims 1 to 10; and
a driving component (50, 60) adapted to removably couple with the cleaning device (1) to provide a rotary movement which is transmitted to the cleaning device (1),
wherein the driving component (50, 60) comprises means for providing light to the light guiding element (30) of the cleaning device (1).

12. Dental cleaning system according to claim 11 with a cleaning device according to claim 10,
wherein the driving component (50, 60) comprises a rotary driving shaft with a clamping mechanism, the clamping mechanism coupling with the pin-like coupling portion (6) of the elongated driving shaft accommodated in the cleaning device (1).

13. Dental cleaning system according to claim 12,
wherein the driving component is a motor handpiece (50) comprising a motor, preferably an electric motor, for driving the rotary driving shaft,
wherein the motor handpiece (50) is directly coupleable with the cleaning device (1) and comprises a light source (57) facing towards the light entry portion (31) of the light guiding element (30) of the cleaning device (1).

14. Dental cleaning system according to claim 12,
wherein the driving component is an adapter element (60), said adapter element (60) being coupleable with a first end to the cleaning device (1) and with a second end with a motor handpiece (50) providing a rotary movement,
wherein the adapter element (60) comprises transmission elements for transmitting the rotary movement provided by the motor handpiece (50) to the cleaning device (1), and wherein the adapter element (60) comprises:
a) a light source (67) being located at the first end for providing light to the light guiding element (30) of the cleaning device (1); or
b) a light guide facing (68) with one end towards the motor handpiece (50) for receiving light provided by a light source (57) of the motor handpiece (50) and facing with a second end towards the light entry portion (31) of the light guiding element (30) of the cleaning device (1).

## Patentansprüche

1. Drehende Reinigungsvorrichtung mit angewinkeltem Kopf (1) für dentale Zwecke, umfassend ein Gehäuse (10), das aus Kunststoff gefertigt ist und einen länglichen Halsabschnitt (11) und einen sich am ersten Ende des Halsabschnitts (11) befindenden und in Bezug dazu angewinkelten Kopfabschnitt (12) ausbildet,
wobei das zweite Ende des Halsabschnitts (11) dazu eingerichtet ist, lösbar mit einer Antriebskomponente (50, 60) gekoppelt zu sein, die eine Drehbewegung vorsieht, und wobei der Halsabschnitt (11) eine Hülse (15) mit einer Wand (16) ausbildet, wobei das Gehäuse (10) Getriebeelemente (4, 5) zur Übertragung einer Drehbewegung von der Antriebskomponente (50, 60) zu einem am Kopfabschnitt (12) vorgesehenen Reinigungswerkzeug (3) enthält,
wobei die Reinigungsvorrichtung (1) ferner ein längliches Lichtleitungselement (30) umfasst, wobei das Lichtleitungselement (30) einen Lichteingangsabschnitt (31), der am zweiten Ende des Halsabschnitts (11) positioniert ist, um von der Antriebskomponente (50, 60) vorgesehenes Licht aufzunehmen, und einen Lichtaustrittsabschnitt (32), der nah am Kopfabschnitt (12) positioniert ist, umfasst,
wobei zumindest ein Abschnitt des Lichtleitungselements (30) in der Wand (16) des Halsabschnitts (11) enthalten ist und
wobei das Lichtleitungselement (30) über eine formschlüssige Verbindung von dem Halsabschnitt (11) gehalten wird, wobei das Lichtleitungselement (30) durch ein separates Element ausgebildet ist, das am Halsabschnitt (11) eingerastet ist.

2. Drehende Reinigungsvorrichtung mit angewinkeltem Kopf (1) nach Anspruch 1, wobei das Lichtleitungselement (30) in Längsrichtung der Reinigungsvorrichtung (1) länglich ist und sich auf der Unterseite der Reinigungsvorrichtung (1) befindet, wo das Reinigungswerkzeug (3) am Kopfabschnitt (12) vorgesehen ist.

3. Drehende Reinigungsvorrichtung mit angewinkeltem Kopf nach Anspruch 1 oder 2,
wobei das Lichtleitungselement (30) in die äußere Form des Halsabschnitts (11) integriert ist.

4. Drehende Reinigungsvorrichtung mit angewinkeltem Kopf nach einem der Ansprüche 1 bis 3,
wobei das Lichtleitungselement (30) einen Klinkenabschnitt (37) umfasst, welcher der Innenseite des Halsabschnitts (11) zugewandt ist, wobei der Klinkenabschnitt (37) dazu eingerichtet ist, ein sich durch den Halsabschnitt (11) erstreckendes Getriebeelement (5) axial zu fixieren.

5. Drehende Reinigungsvorrichtung mit angewinkeltem Kopf nach einem der Ansprüche 1 bis 4,
wobei das Lichtleitungselement(30) aus einem lichtleitenden Material gefertigt ist, vorzugsweise einem lichtleitenden, thermoplastischen Material wie PMMA oder PC, und eine Länge von 23 +10/-5 mm aufweist.

6. Drehende Reinigungsvorrichtung mit angewinkeltem Kopf nach einem der Ansprüche 1 bis 4,
wobei die Länge des Lichtleitungselements (30) derart ist, dass der Lichteingangsabschnitt (31) mit dem hinteren Ende des Halsabschnitts (11) bündig abschließt.

7. Drehende Reinigungsvorrichtung mit angewinkeltem Kopf nach einem der Ansprüche 1 bis 4,
wobei das Lichtleitungselement (30) in einem ausgesparten Lichteinkopplungsabschnitt des Gehäuses (10) der Reinigungsvorrichtung (1) endet.

8. Drehende Reinigungsvorrichtung mit angewinkeltem Kopf nach einem der Ansprüche 1 bis 4,
wobei die Wand (16) des Halsabschnitts (11) einen kurzen Kanalabschnitt (16a) in der Nähe des Kopplungsbereichs umfasst, in welchen das hintere Ende des Lichtleitungselements (30) während des Montagevorgangs eingesetzt wird.

9. Drehende Reinigungsvorrichtung mit angewinkeltem Kopf nach einem der Ansprüche 1 bis 8,
wobei der Lichteingangsabschnitt (31) des Lichtleitungselements (30) dazu eingerichtet ist, mit einem Kopplungsabschnitt der Antriebskomponente (50, 60) zusammenzuwirken, um die Reinigungsvorrichtung (1) gegen Verdrehen in Bezug zur Antriebskomponente (50, 60) zu sichern, und wobei der Lichteingangsabschnitt (31) vorzugsweise einen Vorsprung oder eine Aussparung, der/die dazu eingerichtet ist, in eine/n zugehörige/n an der Antriebskomponente (50, 60) vorgesehene/n Aussparung oder Vorsprung einzugreifen, ausbildet oder sich darin befindet.

10. Drehende Reinigungsvorrichtung mit angewinkeltem Kopf nach einem der Ansprüche 1 bis 9,
wobei ein in dem Halsabschnitt (11) enthaltenes Getriebeelement (5) eine längliche Antriebswelle ausbildet, die an ihrem hinteren Ende einen stiftförmigen Kopplungsabschnitt (6) aufweist, der dazu eingerichtet ist, mit einem Einspannmechanismus der Antriebskomponente (50, 60) zusammenzuwirken.

11. Zahnreinigungssystem, umfassend
eine drehende Reinigungsvorrichtung mit angewinkeltem Kopf (1) nach einem der Ansprüche 1 bis 10 und
eine Antriebskomponente (50, 60), die dazu eingerichtet ist, lösbar mit der Reinigungsvorrichtung (1) gekoppelt zu sein, um eine Drehbewegung vorzusehen, die auf die Reinigungsvorrichtung (1) übertragen wird,
wobei die Antriebskomponente (50, 60) eine Einrichtung umfasst, um das Lichtleitungselement (30) der Reinigungsvorrichtung (1) mit Licht zu versehen.

12. Zahnreinigungssystem nach Anspruch 11 mit Reinigungsvorrichtung nach Anspruch 10,
wobei die Antriebskomponente (50, 60) eine Drehantriebswelle mit einem Einspannmechanismus umfasst, wobei der Einspannmechanismus mit dem stiftförmigen Kopplungsabschnitt (6) der in der Reinigungsvorrichtung (1) enthaltenen länglichen Antriebswelle gekoppelt ist.

13. Zahnreinigungssystem nach Anspruch 12,
wobei die Antriebskomponente ein Motorhandstück (50) ist, das einen Motor, vorzugsweise einen Elektromotor, zum Antreiben der Drehantriebswelle umfasst,
wobei das Motorhandstück (50) mit der Reinigungsvorrichtung (1) direkt koppelbar ist und eine Lichtquelle (57) umfasst, die dem Lichteingangsabschnitt (31) des Lichtleitungselements (30) der Reinigungsvorrichtung (1) zugewandt ist.

14. Zahnreinigungssystem nach Anspruch 12,
wobei die Antriebskomponente ein Adapterelement (60) ist, wobei das Adapterelement (60) mit einem ersten Ende mit der Reinigungsvorrichtung (1) und mit einem zweiten Ende mit einem eine Drehbewegung vorsehenden Motorhandstück (50) koppelbar ist,
wobei das Adapterelement (60) Getriebeelemente zum Übertragen der vom Motorhandstück (50) vorgesehenen Drehbewegung auf die Reinigungsvorrichtung (1) umfasst und
wobei das Adapterelement (60) Folgendes umfasst:
a) eine Lichtquelle (67), die sich am ersten Ende befindet, um das Lichtleitungselement (30) der Reinigungsvorrichtung (1) mit Licht zu versehen; oder
b) einen Lichtleiter (68), der mit einem Ende dem Motorhandstück (50) zugewandt ist, um von einer Lichtquelle (57) des Motorhandstücks (50) vorgesehenes Licht aufzunehmen, und mit einem zweiten Ende dem Lichteingangsabschnitt (31) des Lichtleitungselements (30) der Reinigungsvorrichtung (1) zugewandt ist.

## Revendications

1. Dispositif de nettoyage rotatif à tête inclinée (1) à buts dentaires, comprenant un boîtier (10) qui est fait de plastique et forme une partie col allongée (11) et une partie tête (12) située à une première extrémité de la partie col (11) et inclinée relativement à celle-ci,
dans lequel une seconde extrémité de la partie col (11) est adaptée pour se coupler de façon amovible à un composant d'entraînement (50, 60) fournissant un mouvement rotatif, et dans lequel la partie col (11) forme un manchon (15) avec une paroi (16), le boîtier (10) logeant des éléments de transmission (4, 5) pour transférer un mouvement rotatif depuis le composant d'entraînement (50, 60) à un outil de nettoyage (3) prévu au niveau de la partie tête (12),
dans lequel le dispositif de nettoyage (1) comprend en outre un élément guide-lumière allongé (30), ledit élément guide-lumière (30) comprenant une partie d'entrée de lumière (31) positionnée à la seconde extrémité de la partie col (11) pour recevoir de la lumière fournie par le composant d'entraînement (50, 60) et une partie de sortie de lumière (32) positionnée près de la partie tête (12),
dans lequel au moins une partie de l'élément guide-lumière (30) est logée à l'intérieur de la paroi (16) de la partie col (11), et
dans lequel l'élément guide-lumière (30) est retenu par la partie col (11) par l'intermédiaire d'un assemblage à complémentarité de forme, l'élément guide-lumière (30) étant formé par un élément séparé qui est assujetti par ajustement à encliquetage à la partie col (11).

2. Dispositif de nettoyage rotatif à tête inclinée (1) selon la revendication 1, dans lequel l'élément guide-lumière (30) est allongé dans une direction longitudinale du dispositif de nettoyage (1) et est sur un côté inférieur du dispositif de nettoyage (1), qui est là où l'outil de nettoyage (3) est prévu au niveau de la partie tête (12).

3. Dispositif de nettoyage rotatif à tête inclinée selon la revendication 1 ou 2,
dans lequel ledit élément guide-lumière (30) est intégré dans la géométrie extérieure de la partie col (11).

4. Dispositif de nettoyage rotatif à tête inclinée selon l'une des revendications 1 à 3,
dans lequel l'élément guide-lumière (30) comprend une partie de prise (37) tournée vers l'intérieur de la partie col (11), laquelle partie de prise (37) est adaptée pour fixer axialement un élément de transmission (5) s'étendant à travers la partie col (11).

5. Dispositif de nettoyage rotatif à tête inclinée selon l'une des revendications 1 à 4,
dans lequel l'élément guide-lumière (30) est fait d'un matériau conducteur de lumière, de préférence d'un matériau thermoplastique conducteur de lumière comme du PMMA ou du PC, et a une longueur de 23 +10/-5 mm.

6. Dispositif de nettoyage rotatif à tête inclinée selon l'une des revendications 1 à 4,
dans lequel l'élément guide-lumière (30) a une longueur où la partie d'entrée de lumière (31) est au même niveau avec l'extrémité arrière de la partie col (11).

7. Dispositif de nettoyage rotatif à tête inclinée selon l'une des revendications 1 à 4,
dans lequel l'élément guide-lumière (30) se termine en une partie évidée de couplage d'entrée de lumière du boîtier (10) du dispositif de nettoyage (1).

8. Dispositif de nettoyage rotatif à tête inclinée selon l'une des revendications 1 à 4,
dans lequel la paroi (16) de la partie col (11) comprend une courte partie canal (16a) près de la région de couplage dans laquelle l'extrémité arrière de l'élément guide-lumière (30) est insérée durant le processus de montage.

9. Dispositif de nettoyage rotatif à tête inclinée selon l'une des revendications 1 à 8,
dans lequel la partie d'entrée de lumière (31) de l'élément guide-lumière (30) est adaptée pour coopérer avec une partie de couplage du composant d'entraînement (50, 60) pour fixer le dispositif de nettoyage (1) pour empêcher la rotation par rapport au composant d'entraînement (50, 60), et dans lequel la partie d'entrée de lumière (31), de préférence, forme, ou est située dans, une saillie ou un évidement qui est adapté pour entrer en prise avec un évidement ou une saillie correspondant(e) prévu(e) sur le composant d'entraînement (50, 60).

10. Dispositif de nettoyage rotatif à tête inclinée selon l'une des revendications 1 à 9,
dans lequel un élément de transmission (5) logé dans la partie col (11) forme un arbre d'entraînement allongé ayant, à son extrémité arrière, une partie de couplage de type goupille (6) qui est adaptée pour coopérer avec un mécanisme de serrage du composant d'entraînement (50, 60).

11. Système de nettoyage dentaire, comprenant
un dispositif de nettoyage rotatif à tête inclinée (1) selon l'une des revendications 1 à 10 ; et
un composant d'entraînement (50, 60) adapté pour se coupler de façon amovible au dispositif de nettoyage (1) pour fournir un mouvement rotatif qui est transmis au dispositif de nettoyage (1),
dans lequel le composant d'entraînement (50, 60) comprend des moyens pour fournir de la lumière à l'élément guide-lumière (30) du dispositif de nettoyage (1).

12. Système de nettoyage dentaire selon la revendication 11 avec un dispositif de nettoyage selon la revendication 10,
dans lequel le composant d'entraînement (50, 60) comprend un arbre d'entraînement rotatif avec un mécanisme de serrage, le mécanisme de serrage se couplant à la partie de couplage de type goupille (6) de l'arbre d'entraînement allongé logé dans le dispositif de nettoyage (1).

13. Système de nettoyage dentaire selon la revendication 12,
dans lequel le composant d'entraînement est une pièce à main à moteur (50) comprenant un moteur, de préférence un moteur électrique, pour entraîner l'arbre d'entraînement rotatif,
dans lequel la pièce à main à moteur (50) peut être couplée directement au dispositif de nettoyage (1) et comprend une source de lumière (57) tournée vers la partie d'entrée de lumière (31) de l'élément guide-lumière (30) du dispositif de nettoyage (1).

14. Système de nettoyage dentaire selon la revendication 12,
dans lequel le composant d'entraînement est un élément adaptateur (60), ledit élément adaptateur (60) pouvant être couplé, avec une première extrémité, au dispositif de nettoyage (1) et, avec une seconde extrémité, à une pièce à main à moteur (50) fournissant un mouvement rotatif,
dans lequel l'élément adaptateur (60) comprend des éléments de transmission pour transmettre le mouvement rotatif, fourni par la pièce à main à moteur (50), au dispositif de nettoyage (1), et
dans lequel l'élément adaptateur (60) comprend :
a) une source de lumière (67) située à la première extrémité pour fournir de la lumière à l'élément guide-lumière (30) du dispositif de nettoyage (1) ; ou
b) un guide lumière (68) tourné, avec une extrémité, vers la pièce à main à moteur (50) pour recevoir de la lumière fournie par une source de lumière (57) de la pièce à main à moteur (50) et tourné, avec une seconde extrémité, vers la partie d'entrée de lumière (31) de l'élément guide-lumière (30) du dispositif de nettoyage (1).
